# EUROPÄISCHE PATENTANMELDUNG

(11) **EP 4 703 223 A1**
(43) Veröffentlichungstag der Anmeldung: **04.03.2026**
(21) Anmeldenummer: 25195628.0
(22) Anmeldetag: 13.08.2025
(51) Int. Cl.: B60W 10/18, B60W 10/20, B60W 30/02, B60W 30/045

(54) **VERFAHREN ZUM ANSTEUERN EINES ASSISTENZSYSTEMS EINES ZWEIRADS, ASSISTENZSYSTEM UND ZWEIRAD SOWIE COMPUTERPROGRAMM**

(30) Priorität: 27.08.2024 DE 102024208136
(71) Anmelder: Robert Bosch GmbH, 70442 Stuttgart (DE)
(72) Erfinder: Hellmann, Felix, 4400 Steyr (AT); Schoenherr, Michael, 71272 Renningen-Malmsheim (DE)

(57) **Zusammenfassung**

Die Erfindung umfasst ein Verfahren zum Ansteuern eines Assistenzsystems eines Zweirads, ein Assistenzsystem und Zweirad, sowie ein Computerprogramm. Das Verfahren umfasst die Schritte des Erfassens wenigstens eines fahrdynamischen Parameters des Zweirads und das Erfassen einer vorausliegenden Fahrsituation. Weiter umfasst das Verfahren das Zuordnen der vorausliegenden Fahrsituation in Abhängigkeit des wenigstens einen fahrdynamischen Parameters einem ersten Wert einer Gefährdungsstufe, und das Erfassen einer Veränderung des wenigstens einen fahrdynamischen Parameters durch einen Eingriff des Fahrers. Es umfasst das Zuordnen der Veränderung des wenigstens einen fahrdynamischen Parameters einem Toleranzwert, und Ermittlung eines zweiten Werts der Gefährdungsstufe, wobei der zweite Wert die Differenz aus dem ersten Wert und dem Toleranzwert ist. Das Verfahren umfasst die Aktivierung des Assistenzsystems, wenn der zweite Wert größer ist als ein Eingriffsgrenzwert, oder Unterdrückung des Assistenzsystems, wenn der zweite Wert kleiner ist als der Eingriffsgrenzwert.

## Beschreibung

### Stand der Technik

### Offenbarung der Erfindung

### Stand der Technik

Die vorliegende Erfindung betrifft ein Verfahren zum Betreiben eines Zweirads nach Gegenstand des unabhängigen Anspruchs. Gegenstand der vorliegenden Erfindung ist auch ein Assistenzsystem. Weiterhin betrifft die Erfindung ein Zweirad mit einem derartigen Assistenzsystem, sowie ein entsprechendes Computerprogramm.

Moderne Zweiräder sind üblicherweise mit verschiedenen Assistenzsystemen ausgestattet, die den Fahrer unterstützen sollen und zu diesem Zweck während der Fahrt laufend fahrdynamische Größen des solchen Zweirads als auch Umweltparameter oder Verkehrssituationen erfassen können. Basierend auf solchen erfassten Größen und Daten kann ein Assistenzsystem aktiv eingreifen und Komponenten des Zweirads ansteuern, um fahrdynamische Größen anzupassen und den Fahrer so unterstützen oder vor Unfällen bewahren.

In der DE 10 2019 116 498 A1 ist ein Assistenzsystem beschrieben, das die Aufmerksamkeit eines Fahrers überwacht und einen Eingriff des Assistenzsystem in Abhängigkeit der erfassten Aufmerksamkeit durchführt.

In der DE 10 2017 210 500 A1 ist ein Assistenzsystem beschrieben, das ein Profil eines Fahrers anlegt und einen Eingriff des Assistenzsystems in Abhängigkeit des hinterlegten Profils durchführt.

### Offenbarung der Erfindung

Erfindungsgemäß wird ein Verfahren zum Betreiben eines Zweirads mit den kennzeichnenden Merkmalen der unabhängigen Ansprüche zur Verfügung gestellt. Das solche Verfahren bietet den Vorteil, dass ein Assistenzsystem eines Zweirads bezogen auf eine vorliegende Fahrsituation in Abhängigkeit der Reaktion eines Fahrers angesteuert werden kann und kein Eingriff entgegen einer Erwartung des Fahrers durchgeführt wird.

Das erfindungsgemäße Verfahren umfasst hierzu die nachfolgenden Verfahrensschritte:
Erfassen wenigstens eines fahrdynamischen Parameters des Zweirads sowie Erfassen einer vorausliegenden Fahrsituation.

Zuordnen der vorausliegenden Fahrsituation in Abhängigkeit des wenigstens einen fahrdynamischen Parameters einem ersten Wert einer Gefährdungsstufe.

Erfassen einer Veränderung des wenigstens einen fahrdynamischen Parameters durch einen Eingriff des Fahrers und Zuordnen der Veränderung des wenigstens einen fahrdynamischen Parameters einem Toleranzwert.

Weiter umfasst das Verfahren die Ermittlung eines zweiten Werts der Gefährdungsstufe, wobei der zweite Wert die Differenz aus dem ersten Wert und dem Toleranzwert ist und eine Aktivierung des Assistenzsystems, wenn der zweite Wert größer ist als ein Eingriffsgrenzwert, oder eine Unterdrückung des Assistenzsystems, wenn der zweite Wert kleiner ist als der Eingriffsgrenzwert.

Weitere vorteilhafte Ausführungsformen der vorliegenden Erfindung sind Gegenstand der Unteransprüche.

Es sei angemerkt, dass eine vorausliegende Fahrsituation dabei eine allgemeine Verkehrslage sein kann, wie etwa Position und Geschwindigkeiten anderer Verkehrsteilnehmer, ein Verkehrszeichen, oder eine Eigenschaft der vorausliegenden Strecke, wie etwa eine Kurve oder eine Steigung.

So kann es vorteilhaft sein, wenn die Gefährdungsstufe eine Wahrscheinlichkeit für einen Unfall, einen Sturz oder ein Verlassen der Fahrbahn abbildet, oder eines anderen für die Sicherheit des Fahrers nachteiligen Ereignisses. Dies ist insofern vorteilhaft, als dass ein Wert zur Verfügung steht, anhand dessen eine Fahrsituation bewertet und ein Risiko für den Fahrer des Zweirads quantifiziert werden kann. In Abhängigkeit der erfassten Fahrparameter, etwa der Geschwindigkeit des Zweirads kann die Wahrscheinlichkeit für eine Kollision mit einem anderen Verkehrsteilnehmer ermittelt werden. Ebenso ist es denkbar, dass eine Wahrscheinlichkeit für ein Abkommen des Zweirads von der Fahrbahn ermittelt wird, basierend auf der erfassten Geschwindigkeit des Zweirads und etwa des Kurvenradius einer vorausliegenden Kurve.

In einer weiteren Ausführungsform ist es vorteilhaft, wenn der Eingriffsgrenzwert von dem Assistenzsystem selbst, oder einem weiteren Assistenzsystem des Zweirads festgelegt wird. Dadurch kann der Eingriffsgrenzwert passend zur vorliegenden Fahrsituation festgelegt werden. Bei dem Assistenzsystem kann es sich beispielweise um einen Notbremsassistenten handeln und bei dem weiteren System beispielsweise um ein Abstandswarnsystem des Zweirads. Das Notbremsassistenzsystem könnte den Eingriffsgrenzwert basierend auf erfassten Beschleunigungswerten festlegen, das Abstandswarnsystem basierend auf erfassten Hindernissen. Es ist auch denkbar, dass die Ausgaben der beiden Systeme kombiniert werden und ein gemittelter oder gewichteter Eingriffsgrenzwert festgelegt wird. Bei einem gemittelten Eingriffsgrenzwert, kann ein Mittelwert der beiden Systemausgaben gebildet werden. Bei einem gewichteten Eingriffsgrenzwert, kann ein Mittelewert der beiden Systemausgaben gebildet werden, wobei die Systemausgaben aber vorher mit einem Gewichtungsfaktor multipliziert werden. Beispielsweise kann die Systemausgabe des Notbremsassistenten mit 70% gewichtet sein und die des Abstandswarnsystems mit 30%.

Der Eingriffsgrenzwert beschreibt hierbei einen Grenzwert für die Eintrittswahrscheinlichkeit eines Unfalls, Sturzes, Verlassens der Fahrbahn oder anderweitig für die Sicherheit des Fahrers nachteiligen Ereignisses. Bei Überschreiten des Eingriffsgrenzwertes wird das Assistenzsystem, etwa der Notbremsassistent aktiviert. Es ist auch denkbar, dass der Eingriffsgrenzwert für unterschiedliche Ereignisse unterschiedlich gewählt ist oder mehrere Stufen umfasst. Der Eingriffsgrenzwert kann dabei eine Wahrscheinlichkeit zwischen 0 und 100 Prozent sein, es sind aber auch alternative Skalierungen denkbar wie Zahlenskalen oder die Zuordnung von Ereignisbeschreibungen, die eine Gefährdung für das Zweirad und/oder den Fahrer repräsentieren, beispielsweise "Gefahrlose Fahrt möglich" oder "Kollision unvermeidbar".

Es ist zudem vorteilhaft, wenn zur Festlegung des Eingriffsgrenzwertes ein radarbasierter Sensor genutzt wird. Radarbasierte Sensoren sind insbesondere geeignet, Objekte und Straßenverläufe zu erfassen und können so verlässliche Informationen für die Festlegung des Eingriffsgrenzwerts bereitstellen.

In einer weiteren Ausführungsform ist es zudem von Vorteil, wenn der Betrag des Toleranzwertes in Abhängigkeit des Eingriffs des Fahrers gewählt ist, insbesondere einer Intensität einer Betätigung einer Bremse und/oder einer Reaktionszeit des Fahrers. Dies hat den Vorteil, dass das Verhalten des Fahrers einen Einfluss auf die Aktivierung des Assistenzsystems hat. So kann aus dem Verhalten des Fahrers, etwa wie stark dieser Kurven anbremst, mit anderen Worten wie stark er vor Kurveneinfahrt die Bremse betätigt, daraus geschlossen werden, ob und wie gut dieser die vorausliegende Fahrsituation einschätzt. Der Toleranzwert kann dann in Abhängigkeit dieses Verhaltens vergleichbar größer oder kleiner gewählt werden. Beispielsweise würde das Assistenzsystem bei einem vergleichbar versierten Fahrer, der einen sehr dynamischen Fahrstil hat, nicht aktiviert werden, auch wenn die Gefährdungsstufe durch das Assistenzsystem initial so hoch festgelegt wurde, dass das Assistenzsystem ohne Eingriff des Fahrers aktiviert worden wäre. Der vergleichbar versierte Fahrer, der die Fahrsituation und sein Fahrzeug beherrscht, würde dann in diesem Fall nicht von einem unerwarteten oder unterwünschten Eingreifen des Assistenzsystems überrascht werden. Der Toleranzwert könnte beispielsweise linear mit der Intensität eines Bremsbetätigung verlaufen. Es ist auch denkbar, dass in die Berechnung des Toleranzwertes die Reaktionszeit des Fahrers mit einfließt. Dies könnte das System aus dem Zeitraum zwischen der Erfassung der vorausliegenden Fahrsituation und der Erfassung des Eingriffs des Fahrers ermitteln. In diesem Fall würde der Toleranzwert umgekehrt proportional zur Reaktionszeit sein. Es ist auch denkbar diese beiden Bedingungen miteinander zu kombinieren, oder eine andere mathematische Gesetzmäßigkeit zur Festlegung des Toleranzwertes zu wählen.

Weiter ist denkbar, dass die Dauer der Unterdrückung des Assistenzsystems in Abhängigkeit des Toleranzwertes gewählt ist. So wird bei einem kleinen Toleranzwert das Assistenzsystem kürzer unterdrückt als bei einem größeren Toleranzwert.

Es ist weiter vorteilhaft, wenn der fahrdynamische Parameter eine Geschwindigkeit, eine Beschleunigung oder ein Rollwinkel ist. Anhand dieser Parameter können wichtige Eigenschaften der Fahrdynamik eines Zweirads bestimmt werden. Es ist vorteilhaft, wenn diese, oder einer dieser Parameter erfasst werden. Aus ihnen ist das weitere Fahrverhalten des Zweirads einfach ableitbar. Es ist auch denkbar, dass mehrere dieser Parameter erfasst werden, je nach Fahrsituation kann hier auch eine Gewichtung stattfinden.

In einer weiteren Ausführung ist vorteilhaft, wenn die Aktivierung des ersten Assistenzsystems eine Bremsung, eine Beschleunigung oder einen Lenkeingriff umfasst. Ein derartiger Eingriff hat eine direkte Auswirkung auf die Fahrdynamik des Zweirads und eine kritische Situation kann auf diese schnell aufgelöst werden. So kann das Zweirad etwa abgebremst werden, wenn eine Kollision mit einem vorausfahrenden Fahrzeug droht, oder es könnte eine Ausweichbewegung dargestellt werden. Es ist ebenso denkbar, dass innerhalb einer Kurve mittels eines Lenkeingriffs unterstützt wird, um einen Sturz oder ein Abkommen von der Fahrbahn zu verhindern.

Gegenstand der vorliegenden Erfindung ist auch ein Assistenzsystem eines Zweirads, umfassend eine erste Erfassungseinrichtung ausgebildet zum Erfassen wenigstens eines fahrdynamischen Parameters des Zweirads, und eine zweite Erfassungseinrichtung zum Erfassen einer vorausliegende Fahrsituation. Weiter umfassend eine Auswerteeinheit ausgebildet zum Zuordnen der vorausliegenden Fahrsituation in Abhängigkeit des wenigstens einen fahrdynamischen Parameters einem ersten Wert einer Gefährdungsstufe, wobei die Auswerteeinheit weiter ausgebildet ist zum Erfassen einer Veränderung des wenigstens einen fahrdynamischen Parameters durch einen Fahrer. Die Auswerteeinheit ist zudem ausgebildet zum Zuordnen der Veränderung des wenigstens einen fahrdynamischen Parameters einem Toleranzwert, und zur Ermittlung eines zweiten Werts der Gefährdungsstufe, wobei der zweite Wert die Differenz aus dem ersten Wert und dem Toleranzwert ist, und die Auswerteeinheit ausgebildet ist, zur Bereitstellung eines Signals zur Aktivierung des Assistenzsystems, wenn der zweite Wert größer ist als der Eingriffsgrenzwert, oder zur Bereitstellung eines Signals zur Unterdrückung des Assistenzsystems, wenn der zweite Wert kleiner ist als der Eingriffsgrenzwert.

Die Erfassungseinrichtungen zur Erfassung von fahrdynamischen Zuständen können dabei Geschwindigkeitssensoren, Beschleunigungssensoren oder Neigungssensoren sein. Die Erfassungseinrichtungen für die Erfassung von vorausliegenden Fahrsituationen können dabei Radar, Lidar, Ultraschall oder Kamerabasierte Sensoren sein. Es ist ebenso denkbar, Funksignale anderer Verkehrsteilnehmer zu erfassen, die die vorausliegende Fahrsituation beschreiben. Weiter ist denkbar, dass die Signale von wenigstens zwei Erfassungseinrichtungen miteinander kombiniert werden. Bei der Auswerteeinheit kann es sich beispielsweise um ein Steuergerät des Zweirads handeln.

Ferner ist Gegenstand der vorliegenden Erfindung auch ein Zweirad, insbesondere ein Motorrad, mit einem eben beschriebenen Assistenzsystem. Insbesondere bei Motorrädern sind hohe Fahrdynamiken zu erwarten und ein entsprechendes System kann hier die Fahrsicherheit erhöhen.

Gegenstand der vorliegenden Erfindung ist ebenfalls ein Computerprogramm, das dazu eingerichtet ist, die Verfahrensschritte auszuführen und/oder anzusteuern und/oder einer Auswerteeinheit in einem Assistenzsystem durchgeführt zu werden. Dies erlaubt, dass das Verfahren durch verschiedene Assistenzsysteme ausgeführt werden kann.

### Kurze Beschreibung der Zeichnungen

Ausführungsbeispiele der Erfindung sind in den Zeichnungen dargestellt und in der nachfolgenden Beschreibung näher erläutert.
- Figur 1: schematische Darstellung eines Verfahrens gemäß einer Ausführungsform der vorliegenden Erfindung
- Figur 2: eine schematische Darstellung einer Fahrsituation anhand derer das Verfahren mit möglichen Ergänzungen erläutert wird

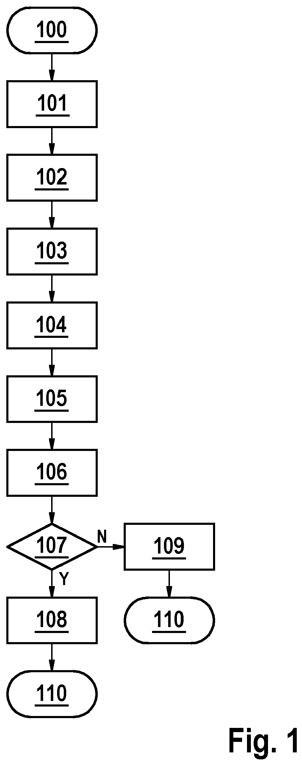

Figur 1 zeigt schematisch einen Ablauf des Verfahrens gemäß einer ersten Ausführungsform der vorliegenden Erfindung. Nach Beginn des Verfahrens 100 wird in Schritt 101 ein fahrdynamischer Parameter, beispielsweise eine Geschwindigkeit erfasst. In Schritt 102 wird eine vorausliegende Fahrsituation erfasst, wie etwa vorausfahrende weitere Verkehrsteilnehmer, oder eine Kurve. Basierend auf den in den Schritten 101 und 102 erfassten Daten wird der vorausliegenden Fahrsituation in Schritt 103 ein erster Wert einer Gefährdungsstufe zugeordnet, als Beispiel sei hier ein Wert von einer 90-prozentigen Wahrscheinlichkeit genannt, mit dem das Zweirad aufgrund der aktuell vorliegenden Geschwindigkeit die Kurve nicht durchfahren kann und die Fahrbahn verlässt. In Schritt 104 wird eine Veränderung eines fahrdynamischen Parameters durch den Fahrer erfasst, in diesem Beispiel durch die Betätigung einer Bremse. In Schritt 105 wird der Betätigung der Bremse ein Toleranzwert zugeordnet, als Beispiel sei hier angenommen, dass der Fahrer sehr intensiv bremst und der Toleranzwert beträgt beispielsweise 50 Prozent. Dieser Wert wird in Schritt 106 nun von der in Schritt 103 festgelegten Gefährdungsstufe abgezogen und so ein zweiter Wert der Gefährdungsstufe ermittelt, hier nun 40 Prozent. Dieser Wert kann nun in Schritt 107 mit einem Eingriffsgrenzwert, beispielhaft 70 Prozent verglichen werden. Ist der zweite Wert größer als dieser Eingriffsgrenzwert, wird in Schritt 108 das Assistenzsystem beispielsweise ein Bremsassistent oder ein Notbremssystem aktiviert. In dem hier beschriebenen Beispiel würde die Aktivierung des Systems in Schritt 109 unterdrückt werden. Mit Schritt 110 endet das Verfahren und kann erneut ablaufen. Das Verfahren kann kontinuierlich in festen Zeitabständen durchlaufen werden, oder auch Situationsbezogen aktiviert werden.

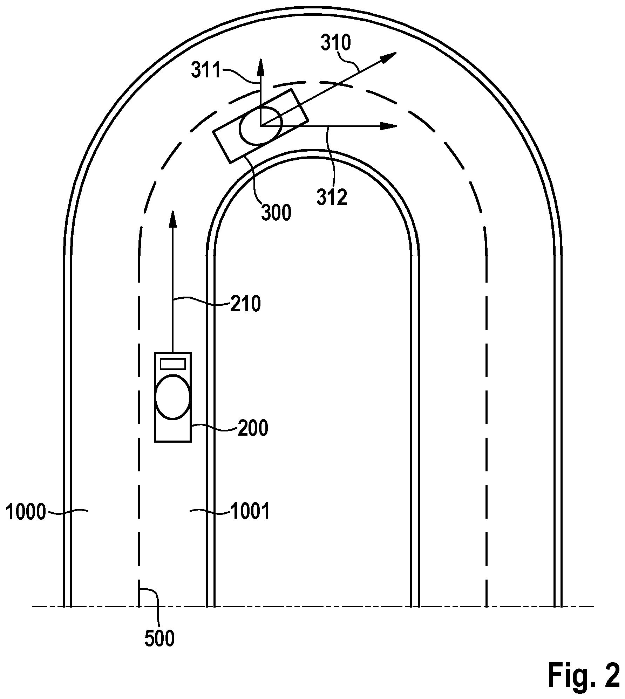

In Figur 2 ist schematisch eine Fahrsituation gezeigt, anhand derer das Verfahren mit möglichen Ergänzungen im Weiteren beschrieben wird.

Es ist eine Straße 1000 mit einer Spitzkehre 1001 gezeigt, wie sie auf Serpentinenstraßen häufig vorzufinden ist, die von den Motorrädern 200 und 300 befahren wird. Das Motorrad 200 ist dabei mit einem Assistenzsystem 500 ausgestattet, die eingerichtet ist, das beanspruchte Verfahren auszuführen, in diesem Beispiel handelt es sich um einen Notbremsassistenten. Die Motorräder 200 und 300 können Teil einer größeren Motorradgruppe sein, deren Fahrer sehr erfahren sind und deren Fahrstil von einer hohen Dynamik geprägt ist. In diesem Beispiel fährt das Motorrad 200 mit einer Geschwindigkeit 210 und das Motorrad 300 mit einer Geschwindigkeit 310, wobei beide Geschwindigkeiten in diesem Beispiel von ihrem Betrag her gleich groß sind. Da sich das Motorrad 300 bereits in der Kurve befindet, kann dessen Geschwindigkeit in einen Längsanteil 311 und einen Lateralanteil 312 zerlegt werden. Der längs gerichtete Geschwindigkeitsanteil 311 der in dieselbe Richtung gerichtet ist, wie die Geschwindigkeit 210 des Motorrads 200 ist dabei je nach Kurve klein, auch wenn die Gesamtgeschwindigkeit 310 identisch zu Geschwindigkeit 210 ist. Ein radarbasiertes System würde diesen Sachverhalt nun fehlinterpretieren und davon ausgehen, dass das Motorrad 200 auf ein langsameres vor ihm befindliches Fahrzeug auffährt und eine Bremsung einleiten. Diese Reaktion kann für den Fahrer des Motorrads 200 störend oder gefährlich sein, da er aufgrund seiner Erfahrung die Situation anders einschätzt und weiß, dass mit dem vorausfahrenden Motorrad 300 keine Gefahr einer Kollision besteht. Er würde hier also keinen Systemeingriff erwarten, auch wenn er bewusst nahe auf das vorausfahrende Motorrad auffährt. Gemäß dem erfindungsgemäßen Verfahren kann dieser Systemeingriff unterdrückt werden, wenn eine entsprechende Fahrweise vorliegt. Dies kann beispielsweise aus dem vom Fahrer angeforderten Bremsdruck abgeleitet werden, etwa wenn er die Kurve schon leicht anbremst. Es kann dabei der Druck selbst erfasst werden, der Zeitraum, in dem dieser schon anliegt, oder die durch den Fahrer hervorgerufene Verzögerung. Ist ein entsprechender Eingriff des Fahrers erfasst, dann wird die Aktivierung des Notbremsassistenten unterdrückt und der Fahrer kann die Kurve so durchfahren wie er es beabsichtigt.

## Patentansprüche

1. Verfahren zum Ansteuern eines Assistenzsystems eines Zweirads (200), umfassend
• Erfassen wenigstens eines fahrdynamischen Parameters des Zweirads, und
• Erfassen einer vorausliegenden Fahrsituation, und
• Zuordnen der vorausliegenden Fahrsituation in Abhängigkeit des wenigstens einen fahrdynamischen Parameters einem ersten Wert einer Gefährdungsstufe,
• Erfassen einer Veränderung des wenigstens einen fahrdynamischen Parameters durch einen Eingriff des Fahrers
• Zuordnen der Veränderung des wenigstens einen fahrdynamischen Parameters einem Toleranzwert, und
• Ermittlung eines zweiten Werts der Gefährdungsstufe, wobei der zweite Wert die Differenz aus dem ersten Wert und dem Toleranzwert ist, und
• Aktivierung des Assistenzsystems (500), wenn der zweite Wert größer ist als ein Eingriffsgrenzwert, oder
• Unterdrückung des Assistenzsystems (500), wenn der zweite Wert kleiner ist als der Eingriffsgrenzwert.

2. Verfahren nach Anspruch 1, wonach die Gefährdungsstufe eine Wahrscheinlichkeit für, einen Unfall, Sturz, oder ein Verlassen der Fahrbahn (1000) abbildet.

3. Verfahren nach einem der vorhergehenden Ansprüche, wonach der Eingriffsgrenzwert von dem Assistenzsystem (500) selbst, oder einem weiteren Assistenzsystem des Zweirads festgelegt wird.

4. Verfahren nach einem der vorhergehenden Ansprüche, wonach zur Festlegung des Eingriffsgrenzwertes ein radarbasierter Sensor genutzt wird.

5. Verfahren nach einem der vorhergehenden Ansprüche, wonach der Betrag des Toleranzwertes in Abhängigkeit des Eingriffs des Fahrers gewählt ist, insbesondere einer Intensität einer Betätigung einer Bremse, und/oder einer Reaktionszeit des Fahrers.

6. Verfahren nach einem der vorhergehenden Ansprüche, wonach der fahrdynamische Parameter eine Geschwindigkeit, eine Beschleunigung oder ein Rollwinkel ist.

7. Verfahren nach einem der vorhergehenden Ansprüche, wobei die Aktivierung des ersten Assistenzsystems (500) eine Bremsung, eine Beschleunigung oder einen Lenkeingriff umfasst

8. Assistenzsystem (500) eines Zweirads, umfassend:
• eine erste Erfassungseinrichtung ausgebildet zum Erfassen wenigstens eines fahrdynamischen Parameters des Zweirads, und
• eine zweite Erfassungseinrichtung zum Erfassen einer vorausliegende Fahrsituation, und
• eine Auswerteeinheit ausgebildet zum Zuordnen der vorausliegenden Fahrsituation in Abhängigkeit des wenigstens einen fahrdynamischen Parameters einem ersten Wert einer Gefährdungsstufe,
• wobei die Auswerteeinheit weiter ausgebildet ist zum Erfassen einer Veränderung des wenigstens einen fahrdynamischen Parameters durch einen Fahrer, und
• die Auswerteeinheit zudem ausgebildet ist zum Zuordnen der Veränderung des wenigstens einen fahrdynamischen Parameters einem Toleranzwert, und
• die Auswerteeinheit weiter ausgebildet ist zur Ermittlung eines zweiten Werts der Gefährdungsstufe, wobei der zweite Wert die Differenz aus dem ersten Wert und dem Toleranzwert ist, und
• die Auswerteeinheit ausgebildet ist, zur Bereitstellung eines Signals zur Aktivierung des Assistenzsystems (500), wenn der zweite Wert größer ist als der Eingriffsgrenzwert, oder zur Bereitstellung eines Signals zur Unterdrückung des Assistenzsystems (500), wenn der zweite Wert kleiner ist als der Eingriffsgrenzwert.

9. Zweirad (200), insbesondere ein Motorrad, mit einem Assistenzsystem (500) nach Anspruch 8.

10. Computerprogramm, das dazu ausgeführt ist, die Schritte des Verfahrens gemäß einem der Ansprüche 1 bis 7 auszuführen und/oder anzusteuern und/oder in einer Auswerteeinheit in einem Assistenzsystem (500) nach Anspruch 8 ausgeführt wird.
